# EUROPÄISCHE PATENTANMELDUNG

(11) **EP 4 573 915 A1**
(43) Veröffentlichungstag der Anmeldung: **25.06.2025**
(21) Anmeldenummer: 23218451.5
(22) Anmeldetag: 20.12.2023
(51) Int. Cl.: A23C 9/123

(54) **FERMENTIERTES MILCHERZEUGNIS**

(71) Anmelder: Yildirim, Ferhat, 1100 Wien (AT)
(72) Erfinder: Yildirim, Ferhat, 1100 Wien (AT)
(74) Vertreter: Puchberger & Partner Patentanwälte

(57) **Zusammenfassung**

Die Erfindung betrifft ein fermentiertes Milcherzeugnis, insbesondere ein Joghurt, mit einer bakteriellen Mischkultur aus *Lactobacillus delbrueckii* subsp. *bulgaricus* und *Streptococcus thermophilus,* wobei das Milcherzeugnis eine Fließspannung von wenigstens 400 Pa, insbesondere von zwischen 400 Pa und 600 Pa, aufweist, und dass das Milcherzeugnis aus Schafmilch hergestellt ist und einen Fettgehalt zwischen 5,5 Gew.-% und 6,5 Gew-% Fett aufweist.

## Beschreibung

Die vorliegende Erfindung betrifft ein fermentiertes Milcherzeugnis.

Fermentierte Milcherzeugnisse sind im Stand der Technik in unterschiedlichen Ausführungen bekannt. Eine davon bildet die Klasse der Joghurts, die typischerweise durch Fermentation von Milch mit einer Mischkultur aus *Lactobacillus delbrueckii* subsp. *bulgaricus* und *Streptococcus thermophilus* erhalten werden. Joghurts weisen typischerweise einen zumindest leicht säuerlichen Geschmack auf und werden für unterschiedliche Anwendungen im Lebensmittelbereich eingesetzt. Durch die Verwendung der genannten bakteriellen Mischkultur hat der Verzehr von Joghurts vorteilhafte Wirkungen auf das Verdauungssystem und die enthaltene Milchsäure wirkt sich positiv auf das Milieu im Magen aus.

In Mitteleuropa kommen hauptsächlich Joghurts zum Einsatz, die auf Basis von Kuhmilch hergestellt werden. Kuhmilch-Joghurts sind jedoch typischerweise wenig formstabil und neigen insbesondere in gerührtem Zustand zum Fließen. Die Herstellung gewisser Lebensmittelprodukte aus Kuhmilch-Joghurts, beispielsweise von Joghurtsaucen, ist daher problematisch, da diese leicht dünnflüssig werden, was ihre Verwendbarkeit beeinträchtigt.

Um eine höhere Formstabilität zu erreichen, sind im Stand der Technik sogenannte gesiebte Joghurts bekannt, die im Vergleich zum natürlichen Fermentationsprodukt einen verringerten Molke- bzw. höheren Trockenmasseanteil aufweisen. Das Problem der oben erwähnten dünnflüssigen Konsistenz kann dadurch zumindest zum Teil gelöst werden, jedoch weisen gesiebte Joghurts durch den erhöhten Trockenanteil typischerweise auch einen erhöhten Brennwert auf, was in ernährungsphysiologischer Hinsicht nachteilig sein kann. Zum Vergleich: Ein typisches gesiebtes Joghurt weist einen Energieinhalt von etwa 1300 kcal/kg auf, während ein typisches Kuhmilch-Joghurt einen Energieinhalt von etwa 600 kcal/kg aufweist.

Aus diesen Umständen ergibt sich ein Zielkonflikt, der insbesondere darin besteht, ein Joghurt bereitzustellen, das eine ausreichende Formstabilität bei gleichzeitig geringerem Energieinhalt aufweist.

Eine Aufgabe der vorliegenden Erfindung kann nun gegebenenfalls darin gesehen werden, diesen Zielkonflikt zu lösen und ein neuartiges Joghurt bereitzustellen, das die genannten Probleme zumindest teilweise löst.

Im Rahmen der vorliegenden Erfindung wurde nun überraschend herausgefunden, dass sich der erwähnte Zielkonflikt zumindest teilweise durch Bereitstellung eines fermentierten Milcherzeugnisses lösen lässt, welches eine bestimmte Fließspannung aufweist, nämlich von wenigstens 400 Pa, und welches aus Schafmilch hergestellt ist. Rheologische Eigenschaften von fermentierten Milcherzeugnissen, wie insbesondere die Fließspannung, definieren unter anderem Parameter wie Mundgefühl, Schluckbarkeit und Verarbeitbarkeit.

Überraschenderweise kann unter anderem durch diese Merkmalskombination ein fermentiertes Milcherzeugnis erhalten werden, das eine besonders hohe Formstabilität aufweist und daher auch als Bestandteil von Lebensmittelprodukten verwendet werden kann, die unter Verwendung herkömmlicher Joghurts dazu tendieren sehr dünnflüssig zu sein und zum Zerfließen neigen.

Die Formstabilität wird ferner dadurch begünstigt, dass das fermentierte Milchprodukt ein stichfestes Joghurt ist und insbesondere eine Stichfestigkeit von wenigstens 1,5 N aufweist. Die Stichfestigkeit von Joghurt ist ein entscheidendes Qualitätsmerkmal, das sowohl aus lebensmitteltechnologischer als auch aus sensorischer Sicht hohe Relevanz hat.

Die Eindringtiefe bis zum Bruch kann gegebenenfalls wenigstens 4,0 mm, beispielsweise zwischen 4,0 mm und 8,0 mm, betragen.

Ein weiteres Charakteristikum des fermentierten Milcherzeugnisses kann seine Viskosität sein. Diese kann wenigstens 500 Pa*s bei einer Scherrate von 0,34/s betragen, beispielsweise zwischen 600 Pa*s und 800 Pa*s.

Aus ernährungsphysiologischer Sicht kann ferner ein hoher Gehalt an Milchsäure vorteilhaft sein, weshalb das fermentierte Milchprodukt gegebenenfalls einen pH-Wert zwischen 4,0 und 4,7, wie beispielsweise zwischen 4,4 und 4,7, insbesondere etwa 4,6, aufweisen kann. Gegebenenfalls wird dadurch die Verdaulichkeit des Milcherzeugnisses verbessert. In Kombination mit den oben genannten Merkmalen, insbesondere dem im Vergleich zu herkömmlichem Kuhmilch-Joghurt, kann dies aufgrund des erhöhten Fettgehalts besonders vorteilhaft sein.

Das fermentierte Milchprodukt weist insbesondere einen natürlichen Gehalt an Molke auf, es ist also nicht gesiebt oder anderweitig aufbereitet, um den Trockenanteil zu erhöhen. Der Trockenanteil des fermentierten Milchprodukts entspricht daher insbesondere im Wesentlichen dem Trockengehalt der Milch, die als Ausgangsprodukt bei der Herstellung verwendet wurde.

In beispielhaften Ausführungsformen kann vorgesehen sein, dass die Fließspannung des fermentierten Milcherzeugnisses zwischen 400 Pa und 600 Pa beträgt, wie beispielsweise zwischen 400 Pa und 500 Pa.

In beispielhaften Ausführungsformen kann vorgesehen sein, dass die Viskosität des fermentierten Milcherzeugnisses bei einer Scherrate von 0,34/s zwischen 500 Pa*s und 800 Pa*s beträgt, wie beispielsweise zwischen 600 Pa*s und 700 Pa*s oder zwischen 700 Pa*s und 800 Pa*s beträgt.

Gegebenenfalls kann vorgesehen sein, dass die Viskosität des fermentierten Milcherzeugnisses
- bei einer Scherrate von 0,17/s zwischen 1800 und 2400 Pa*s liegt,
- bei einer Scherrate von 0,34/s zwischen 500 und 800 Pa*s liegt,
- bei einer Scherrate von 0,67/s zwischen 150 und 400 Pa*s liegt,
- bei einer Scherrate von 1,33/s zwischen 50 und 150 Pa*s liegt,
- bei einer Scherrate von 2,66/s zwischen 30 und 70 Pa*s liegt,
- bei einer Scherrate von 5,31/s zwischen 15 und 40 Pa*s liegt,
- bei einer Scherrate von 10,59/s zwischen 8 und 20 Pa*s liegt,
- bei einer Scherrate von 21,12/s zwischen 5 und 10 Pa*s liegt,
- bei einer Scherrate von 42,14/s zwischen 3 und 6 Pa*s liegt.

Insbesondere nimmt die Viskosität mit steigender Scherrate stetig ab.

In beispielhaften Ausführungsformen kann vorgesehen sein, dass die Stichfestigkeit des fermentierten Milcherzeugnisses zwischen 1,5 N und 2,0 N beträgt.

Das fermentierte Milchprodukt liegt insbesondere in einem verschlossenen Behältnis, wie beispielsweise in einem Becher oder einem Kübel vor.

Eine vorteilhafte Verwendung dieses fermentierten Milchprodukts liegt in der Herstellung eines Getränks, das einen Anteil von 50 Gew.-% bis 90 Gew.-% des fermentierten Milchprodukts aufweist.

Insbesondere ist ein fermentiertes Milcherzeugnis, insbesondere ein Joghurt, geoffenbart, mit einer bakteriellen Mischkultur aus *Lactobacillus delbrueckii* subsp. *bulgaricus* und *Streptococcus thermophilus.*

Bevorzugt ist vorgesehen, dass das Milcherzeugnis eine Fließspannung von wenigstens 400 Pa, insbesondere von zwischen 400 Pa und 600 Pa, aufweist.

Bevorzugt ist ferner vorgesehen, dass das Milcherzeugnis aus Schafmilch hergestellt ist und einen Fettgehalt zwischen 5,5 Gew.-% und 6,5 Gew-% Fett aufweist. Gegebenenfalls ist vorgesehen, dass das fermentierte Milcherzeugnis eine Stichfestigkeit von wenigsten 1,5 N, insbesondere von zwischen 1,5 N und 2,5 N, aufweist.

Gegebenenfalls ist vorgesehen, dass das fermentierte Milcherzeugnis eine Viskosität bei einer Scherrate von 0,34/s von wenigstens 500 Pa*s aufweist.

Gegebenenfalls ist vorgesehen, dass das fermentierte Milcherzeugnis einen pH-Wert bei einer Temperatur von 20°C zwischen 4,4 und 4,7 aufweist.

Gegebenenfalls ist vorgesehen, dass das fermentierte Milcherzeugnis einen Brennwert von zwischen 800 kcal/kg und 1.000 kcal/kg aufweist.

Gegebenenfalls ist vorgesehen, dass das fermentierte Milcherzeugnis einen Proteingehalt von zwischen 4,0 Gew.-% und 6,0 Gew.-% aufweist.

Gegebenenfalls ist vorgesehen, dass das fermentierte Milcherzeugnis einen Kohlehydratgehalt von zwischen 3,5 Gew.-% und 4,5 Gew.-% aufweist.

Gegebenenfalls ist vorgesehen, dass das fermentierte Milcherzeugnis natürlichen Gehalt an Molke aufweist.

Gegebenenfalls ist vorgesehen, dass das fermentierte Milcherzeugnis ein stichfestes Joghurt ist.

Es ist auch ein Lebensmittelprodukt geoffenbart, enthaltend ein fermentiertes Milcherzeugnis wie hier beschrieben, wobei das Lebensmittelprodukt gegebenenfalls wenigstens 50 Gew.-% des fermentierten Milcherzeugnisses enthält.

### Definitionen

### Fließspannung

Die Fließspannung wird mittels einer rheometrischen Methode bei einer Probentemperatur von 4°C bestimmt. Es wird eine 4-flügelige Vane-Geometrie mit einem Durchmesser von 14 mm und einer Länge von 61 mm verwendet, wobei die Vane mit einer konstanten Scherrate von 0,1/s rotiert. Die Fließspannung wurde als Maximum der Zeit-Stresskurve bestimmt. Die Messung kann beispielsweise mit einem Malvern Kinexus-Rheometer (Malvern Instruments Limited, UK) und einer Vane desselben Herstellers erfolgen.

Die Bestimmung der Fließspannung nach dieser Methode wird in der Literatur ausführlich beschrieben, beispielsweise in Harte, F., Clark, S., & Barbosa-Cänovas, G. V. (2007). Yield stress for initial firmness determination on yogurt. Journal of Food Engineering, 80(3), 990-995; Kovalenko, I. V., & Briggs, J. L. (2002). Textural Characterization of Soy-Based Yogurt by the Vane Method. Journal of Texture Studies, 33(2), 105-118; oder Wilbanks, D. J., Lee, M. R., Rahimi, Y. S., & Lucey, J. A. (2023). Comparison of micellar casein isolate and nonfat dry milk for use in the production of high-protein cultured milk products. Journal of Dairy Science, 106(1), 61-74.

### Viskosität

Die Viskosität wird mit derselben Methode bestimmt wie die Fließspannung, mit dem Unterschied, dass ein logarithmischer Anstieg der Scherrate von 0,01/s bis 50/s über einen Zeitraum von 3 Minuten erfolgt.

### Stichfestigkeit

Die Stichfestigkeit wird mittels einer Penetrationsmethode bei einer Probentemperatur von 4°C bestimmt. Die Stichfestigkeit ist definiert als die maximale Kraft, die auf die Oberfläche eines fermentierten Milchprodukts ausgeübt werden kann, wobei die Bestimmung mit einer Messsonde mit einem Durchmesser von 20 mm, einer 5 kg-Kraftmesszelle sowie einer Eindringgeschwindigkeit von 1 mm/s erfolgt. Die Messung kann beispielsweise mit einem TA-XT.2 Texture Analyzer (Stable Micro System, UK) mit einer P20-Sonde (Durchmesser 20 mm) erfolgen.

Bei der Stichfestigkeit handelt es sich insbesondere um jene Kraft, die gemessen wird, wenn die Oberfläche der Probe zum ersten Mal bricht.

Das Verhältnis zwischen dem Durchmesser des Behältnisses und dem Durchmesser der Sonde ist bevorzugt größer als 3:1 um Grenz- oder Wandeffekte zu minimieren.

Im Rahmen der Bestimmung der Stichfestigkeit kann auch die Eindringtiefe bis zum Bruch bestimmt werden, wobei die Eindringtiefe jener Wegstrecke entspricht, die die Sonde von der Oberfläche der Probe bis zur Erreichen der maximalen Kraft zurückgelegt hat.

### pH-Wert

Der pH-Wert wird insbesondere bestimmt durch Messung mit einem pH-Meter bei Raumtemperatur, also bei etwa 20°C.

### Ausführungsbeispiele

Ein erstes Ausführungsbeispiel betrifft ein Schafmilch-Joghurt mit den in Tabelle 1 gezeigten Eigenschaften. Die Bestimmung von Fließspannung, Stichfestigkeit und Viskosität erfolgte wie oben beschrieben (n=3).

**Tabelle 1**

| | |
|---|---|
| Fett (Gew.-%) | 6,0 |
| Kohlehydrate (Gew.-%) | 4,0 |
| Protein (Gew.-%) | 4,8 |
| Brennwert (kcal/kg) | 900 |
| Fließspannung (Pa) | 435 |
| Stichfestigkeit (N) | 1,89 |
| Viskosität¹ (Pa*s) | 626 |
| Eindringtiefe (mm) | 7,4 |
| pH-Wert | 4,61 |

| | |
|---|---|
| ¹bei einer Scherrate von 0,34/s | |

Das Joghurt gemäß dem ersten Ausführungsbeispiel wurde erhalten durch Pasteurisierung von Schafmilch bei einer Temperatur von etwa 85°C mit einer Haltezeit von etwa 30 min. Anschließend wurde die pasteurisierte Milch mit einer bakteriellen Mischkultur aus *Lactobacillus delbrueckii* subsp. *bulgaricus* und *Streptococcus thermophilus* versehen und bei einer Temperatur von etwa 43°C für etwa 8 h inkubiert, um das fertige Joghurt zu erhalten.

Das Joghurt gemäß dem ersten Ausführungsbeispiel weist eine hohe Formstabilität auf und eignet sich daher vorteilhaft für die Weiterverarbeitung in Speisen.

Ein zweites Ausführungsbeispiel betrifft ein Schafmilch-Joghurt mit den in Tabelle 2 gezeigten Eigenschaften. Die Bestimmung von Fließspannung, Stichfestigkeit und Viskosität erfolgte wie oben beschrieben (n=3).

**Tabelle 2**

| | |
|---|---|
| Fett (Gew.-%) | 6,0 |
| Kohlehydrate (Gew.-%) | 4,0 |
| Protein (Gew.-%) | 4,8 |
| Brennwert (kcal/kg) | 900 |
| Fließspannung (Pa) | 453 |
| Stichfestigkeit (N) | 1,60 |
| Viskosität¹ (Pa*s) | 726 |
| Eindringtiefe (mm) | 4,4 |
| pH-Wert | 4,64 |

| | |
|---|---|
| ¹bei einer Scherrate von 0,34/s | |

Die Herstellung erfolgte ähnlich wie in Zusammenhang mit dem ersten Ausführungsbeispiel beschrieben, wobei eine bakterielle Mischkultur mit anderen Bakterienstämmen verwendet wurde.

Im Rahmen der rheologischen Untersuchungen an den Joghurts gemäß den beiden Ausführungsbeispielen wurden die folgenden in Tabelle 3 gezeigten Fließkurven ermittelt.

**Tabelle 3**

| *Scherrate (s⁻¹)* | *Beispiel 1 (Pa*s)* | *Beispiel 2 (Pa*s)* |
|---|---|---|
| 0,17 | 2191,00 | 2106,00 |
| 0,34 | 625,80 | 726,23 |
| 0,67 | 188,20 | 293,83 |
| 1,33 | 73,75 | 131,27 |
| 2,66 | 34,76 | 62,74 |
| 5,31 | 17,67 | 31,12 |
| 10,59 | 9,69 | 16,31 |
| 21,12 | 5,91 | 8,89 |
| 42,14 | 4,90 | 4,63 |

Es zeigt sich, dass sich die maßgeblichen Eigenschaften nicht wesentlich vom Joghurt des ersten Ausführungsbeispiels unterscheiden, sodass eine ähnliche Verwendung möglich ist.

## Patentansprüche

1. **Fermentiertes Milcherzeugnis,** insbesondere Joghurt, mit einer bakteriellen Mischkultur aus *Lactobacillus delbrueckii* subsp. *bulgaricus* und *Streptococcus thermophilus,* **dadurch gekennzeichnet, dass** das Milcherzeugnis eine Fließspannung von wenigstens 400 Pa, insbesondere von zwischen 400 Pa und 600 Pa, aufweist, und dass das Milcherzeugnis aus Schafmilch hergestellt ist und einen Fettgehalt zwischen 5,5 Gew.-% und 6,5 Gew-% Fett aufweist.

2. Fermentiertes Milcherzeugnis nach Anspruch 1, **dadurch gekennzeichnet, dass** es eine Stichfestigkeit von wenigsten 1,5 N, insbesondere von zwischen 1,5 N und 2,5 N, aufweist.

3. Fermentiertes Milcherzeugnis nach Anspruch 1 oder 2, **dadurch gekennzeichnet, dass** es eine Viskosität bei einer Scherrate von 0,34/s von wenigstens 500 Pa*s aufweist.

4. Fermentiertes Milcherzeugnis nach einem der Ansprüche 1 bis 3, **dadurch gekennzeichnet, dass** es einen pH-Wert bei einer Temperatur von 20°C zwischen 4,4 und 4,7 aufweist.

5. Fermentiertes Milcherzeugnis nach einem der Ansprüche 1 bis 4, **dadurch gekennzeichnet, dass** es einen Brennwert von zwischen 800 kcal/kg und 1.000 kcal/kg aufweist.

6. Fermentiertes Milcherzeugnis nach einem der Ansprüche 1 bis 5, **dadurch gekennzeichnet, dass** es einen Proteingehalt von zwischen 4,0 Gew.-% und 6,0 Gew.-% aufweist.

7. Fermentiertes Milcherzeugnis nach einem der Ansprüche 1 bis 6, **dadurch gekennzeichnet, dass** es einen Kohlehydratgehalt von zwischen 3,5 Gew.-% und 4,5 Gew.-% aufweist.

8. Fermentiertes Milcherzeugnis nach einem der Ansprüche 1 bis 7, **dadurch gekennzeichnet, dass** es natürlichen Gehalt an Molke aufweist.

9. Fermentiertes Milcherzeugnis nach einem der Ansprüche 1 bis 8, **dadurch gekennzeichnet, dass** es ein stichfestes Joghurt ist.

10. **Lebensmittelprodukt** enthaltend ein fermentiertes Milcherzeugnis nach einem der Ansprüche 1 bis 9, wobei das Lebensmittelprodukt wenigstens 50 Gew.-% des fermentierten Milcherzeugnisses enthält.
